# EUROPÄISCHE PATENTANMELDUNG

(11) **EP 1 757 404 A1**
(43) Veröffentlichungstag der Anmeldung: **28.02.2007**
(21) Anmeldenummer: 06405261.6
(22) Anmeldetag: 19.06.2006
(51) Int. Cl.: B23Q 39/04, B23Q 11/00, B23B 39/20, B23B 29/32, B23Q 11/08, B23Q 11/14, B23Q 11/12

(54) **Rundtaktmaschine**

(71) Anmelder: Mikron SA Agno, 6903 Lugano 3 (CH)
(72) Erfinder: Wyss, Franz, 6362 Stansstad (CH); Gaboardi, Giordano, 23037 Tirano - SO (IT); Schnyder, Markus, 6935 Bosco Luganese (CH)
(74) Vertreter: Rüfenacht, Philipp Michael

(57) **Zusammenfassung**

Eine Rundtaktmaschine (1) umfasst ein ortsfestes, zum Haltern einer Mehrzahl von Bearbeitungseinheiten ausgebildetes Maschinengestell (100) und einen bezüglich des Maschinengestells (100) um eine, insbesondere vertikale, Schaltachse drehbaren Rundtisch, welcher zumindest teilweise innerhalb des Maschinengestells (100) angeordnet ist und mindestens eine Aufnahme für ein durch die Bearbeitungseinheiten zu bearbeitendes Werkstück aufweist. Innerhalb des Maschinengestells (100) ist ein im Wesentlichen abgeschlossener Arbeitsraum (3) gebildet. Die Rundtaktmaschine (1) umfasst weiter eine im Wesentlichen geschlossene Kabine (400), welche das Maschinengestell (100) und die am Maschinengestell (100) gehalterten Bearbeitungseinheiten umschliesst, und eine Einrichtung (500) zum Temperieren eines Zwischenraums der Kabine (400) und dem abgeschlossenen Arbeitsraum (3) auf eine vorgegebene Temperatur. Aufgrund der im Wesentlichen geschlossenen Kabine (400) ist eine markant verbesserte Temperaturstabilität bei gleichzeitig verringerter notwendiger Kühl- bzw. Heizleistung erreichbar. Beim Neustart der Maschine (1) erreicht diese schneller ihre vorgegebene Betriebstemperatur, während der anschliessenden eigentlichen Produktionszeit kann diese Betriebstemperatur sehr präzise gehalten werden. Durch die vergrösserte thermische Stabilität werden insbesondere auch die mechanische Stabilität und damit die erreichbare Präzision der Bearbeitung weiter erhöht, und die Pannenanfälligkeit wird reduziert. Die Kabine (400) verhindert schliesslich auch weitgehend das Eindringen und Austreten von Spänen oder Staub.

## Beschreibung

### Technisches Gebiet

Die Erfindung betrifft eine Rundtaktmaschine mit einem ortsfesten, zum Haltern einer Mehrzahl von Bearbeitungseinheiten ausgebildeten Maschinengestell und einem bezüglich des Maschinengestells um eine, insbesondere vertikale, Schaltachse drehbaren Rundtisch, welcher zumindest teilweise innerhalb des Maschinengestells angeordnet ist und mindestens eine Aufnahme für ein durch die Bearbeitungseinheiten zu bearbeitendes Werkstück aufweist.

### Stand der Technik

Rundtaktmaschinen der genannten Art sind bekannt. So zeigt zum Beispiel die EP 0 937 539 A1 (Mikron SA Agno) eine derartige Maschine mit einem ortsfesten Maschinengestell, an welchem mehrere Bearbeitungseinheiten angeordnet werden können. Die Rundtaktmaschine weist einen bezüglich des Maschinengestells um eine vertikale Schaltachse drehbaren Rundtisch auf. Das Maschinengestell zeichnet sich durch eine hohe Steifigkeit und Stabilität aus, wobei gleichzeitig im Bereich des Rundtisches ein grosser Freiraum für die Bearbeitung von Werkstücken geschaffen wird. Für die Einstellung bzw. Einrichtung der Maschine wird eine gute Zugänglichkeit zum Rundtisch, zu den am Rundtisch angeordneten Satelliten und zu Indexiervorrichtungen gewährleistet.

Auch die DE 39 41 480 C2 (Witzig und Frank Turmatic) zeigt eine Rundtaktmaschine. Deren Drehtisch ist als Werkzeugrevolver ausgebildet. Dieser ist von einem Maschinengestell umgeben, welches als geschlossener starrer Käfig ausgebildet ist, der auf einen zentralen Fuss aufgesetzt ist. Das Maschinengestell weist eine Bodenwand sowie eine scheibenförmige obere Wand auf, welche über bügelförmige Konstruktionselemente miteinander verbunden sind. An der oberen Wand ist ein Werkstückträger um eine vertikale Achse drehbar gelagert. Mehrere Bearbeitungseinheiten können übereinander in Lagerbüchsen der Wände oder der bügelartigen Konstruktionselemente gehaltert werden.

Aus der EP 0 785 040 A1 (Witzig und Frank Turmatic) wiederum ist eine Rundtaktmaschine bekannt mit einem als einstückige Schweisskonstruktion ausgebildeten Rahmen, welcher eine steife, in sich geschlossene Zelle bildet. Diese umschliesst einen Innenraum, welcher weitgehend von der Umgebung getrennt ist. An der Oberseite der Zelle ist ein Spindelträger um eine vertikale Schaltachse drehbar gelagert. Die Werkzeuge der Arbeitsstationen erhalten durch entsprechende Durchgänge der Zelle Zugang zum Innenraum der Zelle. Weitere, durch Türen verschliessbare Zugangsöffnungen ermöglichen den manuellen Zugriff auf den Innenraum.

Den genannten Rundtaktmaschinen ist gemeinsam, dass durch einen kompakten (käfigartigen) Aufbau eine hohe mechanische Stabilität erreicht wird. Gleichzeitig zeichnen sie sich wegen des modularen Aufbaus durch eine hohe Flexibilität aus.

Bei vielen Bearbeitungsverfahren ist neben der mechanischen Stabilität aber auch eine hohe thermische Stabilität notwendig, besonders wenn durch die Bearbeitung selbst viel Wärme erzeugt wird.

### Darstellung der Erfindung

Aufgabe der Erfindung ist es deshalb, eine dem eingangs genannten technischen Gebiet zugehörende Rundtaktmaschine zu schaffen, welche hinsichtlich ihrer thermischen Stabilität verbessert ist.

Die Lösung der Aufgabe ist durch die Merkmale des Anspruchs 1 definiert. Gemäss der Erfindung ist innerhalb des Maschinengestells ein im Wesentlichen abgeschlossener Arbeitsraum gebildet. Die Rundtaktmaschine umfasst eine im Wesentlichen geschlossene Kabine, welche das Maschinengestell und die am Maschinengestell gehalterten Bearbeitungseinheiten umschliesst, sowie eine Einrichtung zum Temperieren des Zwischenraums zwischen der Kabine und dem abgeschlossenen Arbeitsraum auf eine vorgegebene Temperatur.

Aufgrund der im Wesentlichen geschlossenen Kabine, welche sowohl das Maschinengestell als auch die daran gehaltenen Bearbeitungseinheiten umschliesst, können die Umgebung des Maschinengestells und die Bearbeitungseinheiten temperiert werden, indem lediglich der von der Kabine umschlossene Zwischenraum temperiert wird. Es ist nicht notwendig, beispielsweise eine ganze Fabrikhalle zu klimatisieren. Die lokale Temperaturkontrolle trägt zudem lokal auftretenden Temperaturunterschieden, beispielsweise im Fall unterschiedlicher Wärmeentwicklung bei verschiedenen Maschinen, sowie unterschiedlichen Erfordernissen an die Höhe und Stabilität der Temperatur Rechnung. Es ist somit eine markant verbesserte Temperaturstabilität bei gleichzeitig verringerter notwendiger Kühl- bzw. Heizleistung erreichbar.

Nach dem Neustart der Maschine wird die Einrichtung zum Temperieren in der Regel zum Erwärmen des Zwischenraums eingesetzt, so dass die Maschine schneller ihre vorgegebene Betriebstemperatur erreicht. Die für den Warm-up benötigte Zeit wird somit reduziert. Anschliessend, während der eigentlichen Produktionszeit, kann diese Betriebstemperatur sehr präzise gehalten werden, indem die Einrichtung zum Temperieren als Kühleinrichtung eingesetzt wird, welche die durch den Produktionsprozess entstehende Wärme abführt. Durch die vergrösserte thermische Stabilität werden insbesondere auch die mechanische Stabilität und damit die erreichbare Präzision der Bearbeitung weiter erhöht, weil ein thermischer Verzug von Elementen des Maschinengestells oder der Bearbeitungseinheiten aufgrund von Temperaturschwankungen und -unterschieden möglichst verhindert wird. Durch die gleich bleibende Betriebstemperatur wird zudem die Belastung aller Elemente der Rundtaktmaschine minimiert, was eine geringere Pannenanfälligkeit und eine höhere Lebensdauer zur Folge hat.

Es ist nicht zwingend, dass bei einer erfindungsgemässen Maschine die Einrichtung zum Temperieren sowohl eine Kühl- als auch eine Erwärmungsfunktion wahrnehmen kann. Je nach Anwendung kann es ausreichend sein, wenn die Einrichtung eine reine Kühleinrichtung ist.

Die Kabine schliesst zudem nicht nur thermisch gegen die Umgebung ab, sondern verhindert auch weitgehend das Eindringen und Austreten von Staub. Es wird somit verhindert, dass der innerhalb der Rundtaktmaschine entstehende Staub zu Verunreinigungen des Fabrikationsraums und damit gegebenenfalls zu Störungen bei anderen Maschinen führt; gleichzeitig ist die Rundtaktmaschine aber auch weitgehend unempfindlich auf allfälligen, von anderen Maschinen her stammenden Staub im Fabrikationsraum.

Die Bearbeitung der Werkstücke findet in dem im Wesentlichen abgeschlossenen Arbeitsraum statt, welcher innerhalb des Maschinengestells gebildet ist. Durch die Abgeschlossenheit des Arbeitsraums wird die Belastung mit Spänen, Staub und anderen bei der Bearbeitung entstehenden Verschmutzungen auf den Arbeitsraum beschränkt. Späne, Staub etc. können diesen nur auf entsprechend vorgesehenen Wegen, also beispielsweise durch eine Abfuhreinrichtung für Späne oder eine Staubabsaugeeinrichtung verlassen. Dadurch kann die Staubbelastung derjenigen Komponenten der Rundtaktmaschine, welche keinen direkten Kontakt mit dem Arbeitsraum haben, wesentlich verringert werden. So können beispielsweise die Bearbeitungseinheiten derart ausgebildet sein, dass im Wesentlichen nur ihre Bearbeitungswerkzeuge in den Arbeitsraum eintreten und die restlichen Komponenten wie Antriebe, Führungen oder Gelenke ausserhalb des Arbeitsraums angeordnet sind.

Zum Kühlen des Innenraums der Kabine umfasst die Einrichtung zum Temperieren mit Vorteil Auslässe zum Einleiten eines Temperiergases, insbesondere von Luft, in den Zwischenraum. Das Temperiergas zirkuliert somit zwischen der Innenwand der Kabine und dem abgeschlossenen Arbeitsraum, kühlt somit einerseits direkt diejenigen Komponenten der Maschine, welche mit diesem Zwischenraum in Kontakt sind und bringt andererseits die Umgebung des Arbeitsraums auf eine vorgegebene, im Wesentlichen gleich bleibende Temperatur. Eine derartige Gas- bzw. Luftkühlung lässt sich einfach realisieren und kann den Zwischenraum gleichmässig erfassen. Die Temperierung mit Umgebungsluft ist besonders einfach und kostengünstig.

Als Alternative (oder zusätzlich zur Gas- bzw. Luftkühlung oder -heizung) können im Innenraum der Kabine beispielsweise Kühl- bzw. Heizelemente angeordnet werden, in welchen eine Temperierflüssigkeit zirkuliert.

Die Einrichtung zum Temperieren des Innenraums ist mit Vorteil derart ausgebildet, dass eine vorgegebene Temperatur im Zwischenraum auf ±2 °C, bevorzugt auf ±1 °C, genau einstellbar ist. Mit entsprechend genauen Temperatursensoren, einer entsprechend genau einstellbaren Vorrichtung zum Temperieren des verwendeten Kühlmittels und einer ausreichenden Umwälzung des Kühlmittels kann eine derartige Temperaturgenauigkeit sichergestellt werden. Die dazu notwendigen Komponenten (Sensoren, Kühl- bzw. Heizaggregate, Wärmetauscher, Pumpen etc.) sind an sich bekannt und kommerziell verfügbar.

In den abgeschlossenen Arbeitsraum innerhalb des Maschinengestells ist vorzugsweise eine Temperierflüssigkeit einleitbar. Aufgrund der hohen Wärmekapazität einer Flüssigkeit kann diese die innerhalb des Arbeitsraums entstehende Wärme schnell abführen bzw. dem Arbeitsraum Wärme schnell zuführen. Der Arbeitsraum kann also, inklusive die Werkstücke, die Werkstückträger und die Werkzeuge, effektiv temperiert werden. Die Temperierflüssigkeit dient mit Vorteil gleichzeitig zur Spülung des Arbeitsraums, d. h. zum Entfernen von Spänen vom Werkstück oder von den Werkzeugen und zum Binden von entstehendem Staub. Dazu sind in der Begrenzung des Arbeitsraums, d. h. beispielsweise am Maschinengestell, Düsen angeordnet, deren Öffnungen in den Arbeitsraum münden und die eine gewünschte Verteilung der Temperierflüssigkeit sicherstellen.

Bevorzugt sind in strukturellen Elementen des Maschinengestells Leitungen für die Temperierflüssigkeit vorgesehen, wobei zumindest einige der Leitungen in am Maschinengestell angeordneten Auslässen zum Einleiten der Temperierflüssigkeit in den Arbeitsraum münden. Die Temperierflüssigkeit dient somit sowohl zur Temperierung und gegebenenfalls Spülung des Arbeitsraums als auch zur Temperierung bzw. thermischen Stabilisierung der strukturellen Elemente des Maschinengestells. Dadurch können thermisch bedingte Verschiebungen im Maschinengestell und somit entsprechende Ungenauigkeiten bei der Bearbeitung auf einfache Weise minimiert werden.

Alternativ können zur Temperierung des Maschinengestells und zum Temperieren und Spülen des Arbeitsraums gesonderte Temperiermittelleitungen vorgesehen werden. In bestimmten Fällen, insbesondere bei moderater Wärmeentwicklung kann auf eine gesonderte Temperierung des Maschinengestells verzichtet werden, dieses wird dann von aussen durch die Einrichtung zum Temperieren des Zwischenraums und von innen durch die in den Arbeitsraum eingebrachte Temperierflüssigkeit temperiert.

Bevorzugt umfasst die Einrichtung zum Kühlen des Innenraums der Kabine eine Abführeinrichtung zum Abführen des Temperiergases aus dem Innenraum der Kabine und einen Wärmetauscher zum erneuten Abkühlen bzw. Erwärmen des abgeführten Temperiergases, so dass ein im Wesentlichen geschlossener Temperiergas-Kreislauf gebildet werden kann. Diese Massnahme ist insbesondere dann zu treffen, wenn nicht Umgebungsluft als Temperiergas verwendet wird. Aber auch bei der Verwendung von Luft kann sie sinnvoll sein, z. B. wenn die Umgebungsluft in einem zentralen Kühlaggregat auf die vorgegebene Temperatur gebracht wird, welches seine Abwärme nicht in den Fabrikationsraum abgibt oder wenn eine zusätzliche Luftschranke zur Verhinderung eines Austritts schädlicher Stoffe aus dem Arbeitsraum benötigt wird.

In einer bevorzugten Ausführung der Erfindung sind die Auslässe zum Einleiten des Temperiergases im Bodenbereich der Rundtaktmaschine angeordnet, während Einlässe der Abführeinrichtung im Deckenbereich der Rundtaktmaschine, insbesondere in einem Deckenteil der Kabine, angeordnet sind. Der Zwischenraum zwischen der Begrenzung der Kabine und dem abgeschlossenen Arbeitsraum wird also von unten nach oben durch das Temperiergas durchströmt. Die Zirkulation des Temperiergases kann somit durch Konvektion bewirkt oder verstärkt werden, so dass sich ein aktives Absaugen (mittels Pumpen) erübrigt oder so dass zumindest die Pumpleistung verringert werden kann. Besonders in Kombination mit einer Flüssigkeitstemperierung innerhalb des Arbeitsraums, bei welcher die Flüssigkeit mittels Düsen im oberen Bereich des Arbeitsraums abgegeben wird, ergibt sich eine gleichmässige Temperierung des gesamten Kabineninnenraums.

Übliche Bearbeitungseinheiten umfassen eine Arbeitsspindel zum Halten eines Werkzeugs (z. B. eines Bohrers, eines Fräs- oder Schneidkopfs). Die Spindel kann je nach Anwendungszweck eine einzige Drehachse aufweisen, oder die Drehachse kann mit einer oder mehreren Schwenkachsen kombiniert sein. Der Betrieb der Spindel kann insbesondere elektrisch oder hydraulisch erfolgen. Diese Arbeitsspindel weist nun mit Vorteil Kühlleitungen für eine Kühlflüssigkeit auf zum Kühlen der Arbeitsspindel und des Werkzeugs sowie zum Spülen eines Arbeitsbereichs der Arbeitsspindel. Die bei der Bearbeitung des Werkstücks entstehende Wärme kann somit effizient sowohl durch die Kühlung des Arbeitsraums (beispielsweise die eingeleitete Kühlflüssigkeit) als auch durch die in der Arbeitsspindel geführte Kühlflüssigkeit abgeleitet werden. Weil die in der Arbeitsspindel geführte Kühlflüssigkeit präzise auf den Ort der Wärmeentwicklung gerichtet werden kann, kann auch bei einem verhältnissmässig geringen Volumen der Kühlflüssigkeit viel Wärme abgeführt werden. Die Gerichtetheit der Kühlflüssigkeit ermöglicht auf dieselbe Weise einen effizienten Abtransport von Spänen und Staub. Die Kühlleitungen für die Kühlflüssigkeit können an einem vorderen, dem Werkstück zugewandten Ende der Arbeitsspindel münden oder sie setzen sich sogar innerhalb des an der Spindel angeordneten Werkzeugs fort. So kann die Zielgerichtetheit der Kühlung und der Spülung weiter verbessert werden. Gleichzeitig wird eine Erhitzung des Werkzeugs weitgehend vermieden, wodurch dessen Lebensdauer massiv verlängert werden kann.

Das Maschinengestell der Rundtaktmaschine ist mit Vorteil durch einen im Wesentlichen rotationssymmetrischen Unterteil und einen im Wesentlichen rotationssymmetrischen Oberteil gebildet, die Grundfläche des Unter- und des Oberteil sind beispielsweise regelmässige n-Ecke, wobei n mindestens 8 ist. Es hat sich gezeigt, dass die Aufteilung in einen Unterteil und einen Oberteil einen einfachen und trotzdem stabilen Aufbau der Maschine ermöglicht. Durch die Rotationssymmetrie wird gewährleistet, dass am Maschinengestell auftretende Kräfte gleichmässig über das Gestell verteilt werden, wodurch ein mechanischer Verzug des Gestells vermieden wird. Zusammen mit den bereits beschriebenen Massnahmen zur Temperaturkontrolle ergibt sich eine besonders gute Stabilität der erfindungsgemässen Maschine und somit eine besonders hohe Bearbeitungspräzision.

Der Unterteil und der Oberteil sind bevorzugt einstückige Gussteile, d. h. die strukturellen Elemente der beiden Teile und die sie verbindenden Teile sind einstückig gegossen worden. Durch den einstückigen Aufbau der Teile erübrigen sich eine Vielzahl von Befestigungs- und Verbindungselementen wie Schrauben, Bolzen oder Nieten bzw. von Schweissverbindungen. Dies führt zu einer höheren mechanischen Stabilität und vermeidet Schäden durch die unterschiedliche thermische Ausdehnung miteinander verbundener Elemente aus unterschiedlichen Materialien. Das Unterteil und das Oberteil können beispielsweise miteinander verschraubt werden. Als Material für den Guss der Teile geeignet ist beispielsweise Sphäroguss (GGG60).

Die Bearbeitungseinheiten werden mit Vorteil am Maschinengestell gehaltert, indem sie in sektorartige Ausschnitte des Maschinengestells eingesetzt und anschliessend befestigt werden. Die Sektoren, welche durch die Ausschnitte gebildet werden, können beispielsweise im Wesentlichen den Kanten eines n-eckigen Maschinengestells entsprechen, d. h. bei einem zwölfeckigen Maschinengestell sind entlang dessen Umfangs zwölf sektorartige Ausschnitte vorgesehen, wobei jedem der Ausschnitte ein Mittelpunktswinkel von ca. 30° (abzüglich der Ausdehnung des Maschinengestells zwischen benachbarten Ausschnitten) zukommt. Die Ausschnitte ermöglichen eine hohe Zahl verschiedener Konfigurationen und damit einen flexiblen Einsatz und gegebenenfalls ein schnelles Umrüsten der erfindungsgemässen Rundtaktmaschine. Zum Abschliessen des Arbeitsraums gegen aussen werden nicht benutzte Ausschnitte durch passende Blenden abgedeckt.

Das Maschinengestell kann so ausgebildet sein, dass bis zu drei Bearbeitungseinheiten übereinander angeordnet werden können. Dies ermöglicht die Bearbeitung eines am Rundtisch aufgenommenen Werkstücks von der Seite, von unten und von oben. Je nach geforderter Bearbeitung kann in einem Sektor eine einzige Bearbeitungseinheit angeordnet werden (unten, seitlich, oben), es können zwei Bearbeitungseinheiten übereinander zum Einsatz kommen (unten/seitlich, unten/oben, seitlich/oben), oder die Bearbeitung findet gleichzeitig mit drei Bearbeitungseinheiten (unten/seitlich/oben) statt. Einige der Sektoren können je nach Konfiguration auch ganz frei sein von Bearbeitungseinheiten.

Bei einer bevorzugten Ausführung der vorliegenden Erfindung sind jeweils pro Sektor übereinander mindestens zwei sektorartige Ausschnitte angeordnet. Ein oberer dieser Ausschnitte ist an einer unteren Seite des Oberteils ausgebildet zur Aufnahme einer Bearbeitungseinheit für die Bearbeitung von unten. Ein unterer der Abschnitte ist an einer äusseren und/oder oberen Seite des Oberteils ausgebildet zur Aufnahme einer Bearbeitungseinheit für die Bearbeitung von der Seite und/oder von oben. Die Bearbeitungseinheiten können somit an demselben Maschinenteil befestigt werden, wodurch die relative Positionsgenauigkeit der Bearbeitungseinheiten und die mechanische Stabilität der Maschine optimiert werden können.

Der obere Ausschnitt kann sich sowohl über einen im Wesentlichen vertikalen als auch über einen im Wesentlichen horizontalen Abschnitt des Oberteils erstrecken und derart ausgebildet sein, dass eine schwenkbare Bearbeitungseinheit aufgenommen werden kann. Diese ist aus einer ersten Position, in welcher das Werkstück im Wesentlichen von der Seite bearbeitet wird, in eine zweite Position, in welcher das Werkstück im Wesentlichen von oben bearbeitet wird, verschwenkbar. Mit einer einzigen Bearbeitungsstation kann das Werkstück somit aus unterschiedlichsten Richtungen bearbeitet werden, wobei die Bearbeitungsstation durchaus auch in Zwischenstellungen zwischen der ersten und der zweiten Position gebracht und aus diesen Stellungen eine Bearbeitung vornehmen kann.

Der sich sowohl über den vertikalen als auch über den horizontalen Abschnitt des Oberteils erstreckende Ausschnitt kann durch eine einschiebbare Platte in zwei Ausschnitte unterteilt werden, so dass zwei übliche Bearbeitungseinheiten (seitlich/oben) in diesem Ausschnitt angeordnet werden können. Die Ausschnitte und die einschiebbare Platte sind mit Vorteil derart ausgebildet, dass an allen drei übereinander liegenden Positionen Bearbeitungsstationen desselben Typs zum Einsatz kommen können. Dies vereinfacht die Umrüstung auf neue Bearbeitungsaufgaben und verringert die Lagerhaltungskosten für die Bearbeitungsstationen.

Die vorstehend und im Folgenden dargelegten Aspekte der Ausgestaltung des Maschinengestells und der Bearbeitungseinheiten sind auch bei Rundtaktmaschinen vorteilhaft, die keine Kabine, welche das Maschinengestell und am Maschinengestell gehalterte Bearbeitungseinheiten umschliesst, und keine Einrichtung zum Kühlen des Innenraums der Kabine umfassen, insbesondere dann, wenn sich aufgrund der durchgeführten Bearbeitungsschritte wenig Wärme innerhalb der Maschine entwickelt oder wenn diese auf andere Weise abgeführt werden kann.

Bevor die am Drehtisch gehaltenen Werkstücke durch die Bearbeitungseinheiten bearbeitet werden können, wird mit Vorteil der Drehtisch fest am Maschinengestell verankert. Dadurch wird zum einen das Maschinengestell stabilisiert, zum anderen wird der Drehtisch in einer ortsfesten Position am Maschinengestell fixiert. Somit kann also die Stabilität der Rundtaktmaschine insgesamt erhöht werden. Zur Verankerung ist bevorzugt am Drehtisch ein erster Ring mit einer Hirth-Verzahnung fest angeordnet, während koaxial dazu ein zweiter Ring mit Hirth-Verzahnung am Maschinengestell, insbesondere am Oberteil des Maschinengestells befestigt ist. Ein dritter, vertikal bewegbarer, aber mit Bezug auf das Maschinengestell drehfester Ring mit Hirth-Verzahnung wirkt mit dem ersten und dem zweiten Ring zusammen und kann diese fest aneinander halten. Die Verankerung kann jederzeit durch Bewegen des dritten Rings gelöst werden, damit der Drehtisch mittels seiner Schaltachse zur nächsten Drehposition bewegt werden kann.

Zum Bewegen des dritten Rings sind mit Vorteil am Maschinengestell, insbesondere oben am Maschinenoberteil, mehrere Hydraulikeinheiten angeordnet, mittels welchen dieser dritte Ring angehoben werden kann, um den ersten mit dem zweiten Ring zu koppeln, und abgesenkt, um den Drehtisch freizugeben und eine Drehbewegung desselben zu ermöglichen.

Auch die Aspekte der Verankerung des Drehtischs lassen sich im Prinzip mit den dargelegten Vorteilen auch bei anderen Rundtaktmaschinen realisieren, die nicht mit dem erfindungsgemässen Kühlsystem versehen sind. Im Zusammenhang mit der thermischen Stabilität der erfindungsgemässen Rundtaktmaschine ergibt sich durch die stabile Verankerung aber eine besonders hohe Positionsgenauigkeit.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: Eine Schrägansicht des Maschinengestells einer erfindungsgemässen Rundtaktmaschine mit eingesetzten Bearbeitungseinheiten und Drehtisch;
- Fig. 2: eine Aussenansicht der Rundtaktmaschine;
- Fig. 3: einen vertikalen Querschnitt durch die Rundtaktmaschine;
- Fig. 4A, B: Schrägansichten des Oberteils und des Unterteils des Maschinengestells;
- Fig. 5: einen vertikalen Querschnitt durch den Oberteil des Maschinengestells mit im Maschinengestell verlaufenden Kühlleitungen;
- Fig. 6: eine schematische Darstellung des Kühlsystems der Rundtaktmaschine;
- Fig. 7: eine Schrägansicht eines Drehtischs mit vertikal orientierten Werkstückaufnahmen und zugeordnete Bearbeitungseinheiten;
- Fig. 8: eine Schrägansicht eines Drehtischs mit horizontal orientierten Werkstückspindeln und zugeordneten Bearbeitungseinheiten;
- Fig. 9: einen vertikalen Querschnitt durch den Arbeitsraum der Rundtaktmaschine;
- Fig. 10: eine Schrägansicht einer schwenkbaren Bearbeitungseinheit;
- Fig. 11: eine Schrägansicht der Einrichtung zum Festsetzen des Drehtischs am Maschinengestell; und
- Fig. 12: einen vertikalen Querschnitt durch die Einrichtung zum Festsetzen.

Grundsätzlich sind in den Figuren gleiche Teile mit gleichen Bezugszeichen versehen.

### Wege zur Ausführung der Erfindung

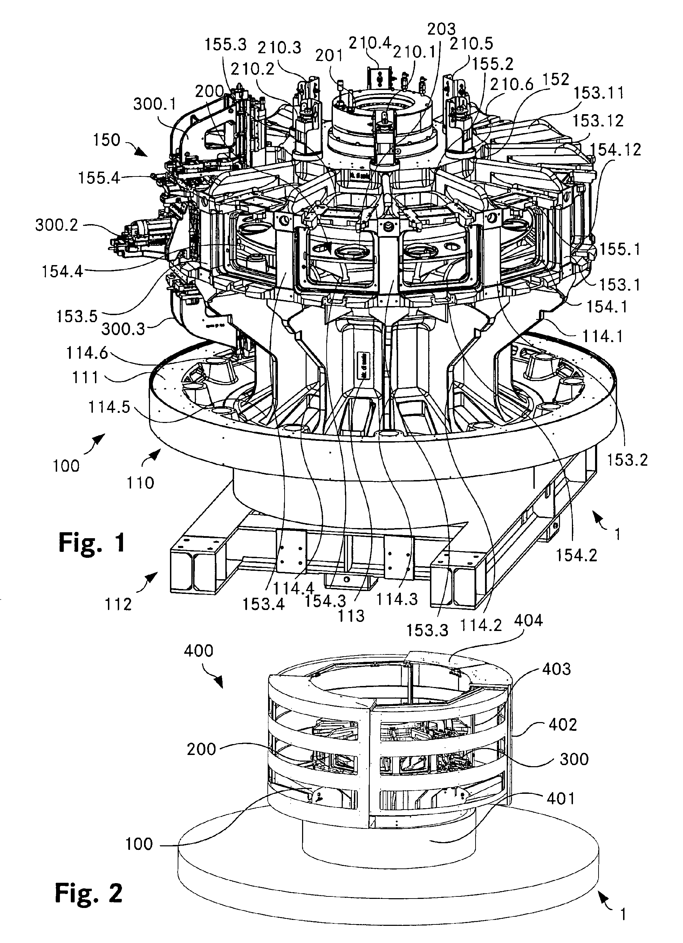

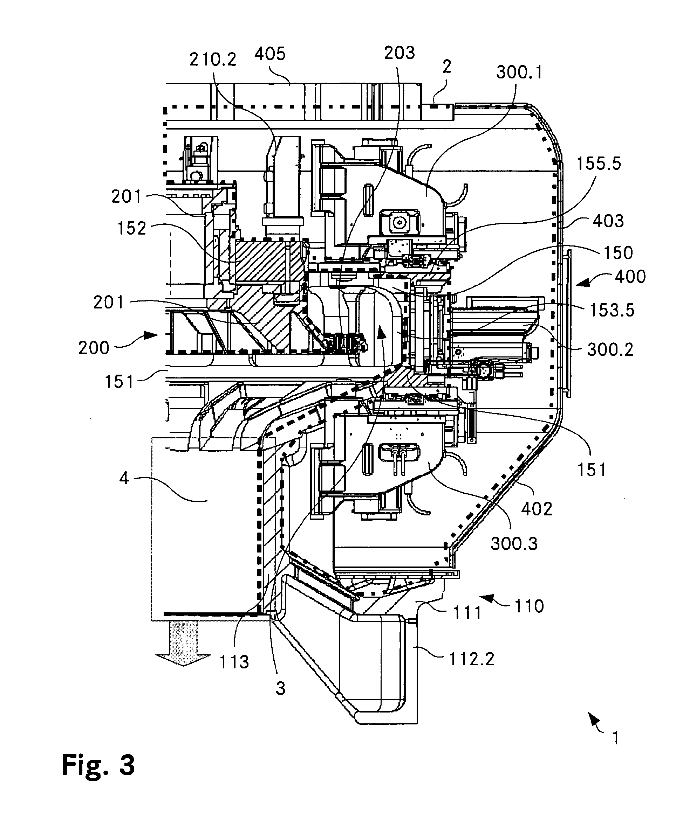

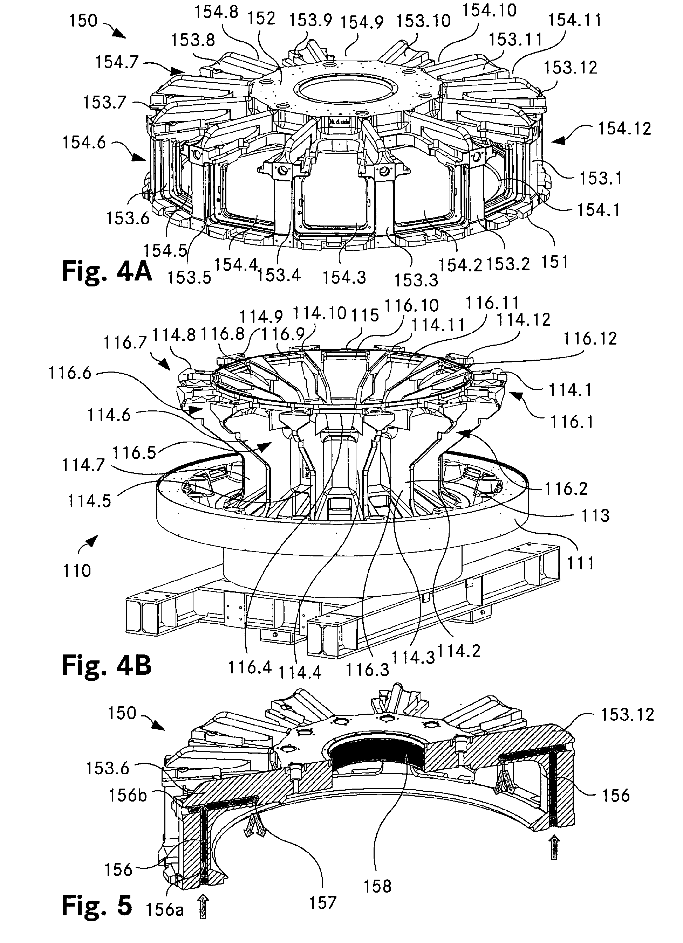

Die Figur 1 zeigt eine Schrägansicht eines Ausführungsbeispiels einer erfindungsgemässen Rundtaktmaschine 1 mit einem Maschinengestell 100, eingesetzten Bearbeitungseinheiten 300.1, 300.2, 300.3 und einem im Maschinengestell 100 aufgenommenen Drehtisch 200. Zugunsten einer besseren Einsicht in die Maschine ist bei dieser Ansicht die Kabine (siehe Figuren 2 und 3) weggelassen, und es sind nur drei Bearbeitungseinheiten 300.1, 300.2, 300.3 dargestellt. Die Figur 3 zeigt einen vertikalen Querschnitt durch einen Teil der Rundtaktmaschine 1, in den Figuren 4A, 4B sind das Unterteil 110 und das Oberteil 150 des Maschinengestells 100 in Schrägansichten einzeln dargestellt.

Das Maschinengestell 100 (siehe auch Figuren 4A, 4B) ist im Wesentlichen rotationssymmetrisch und besteht aus einem Unterteil 110 sowie einem Oberteil 150, welche beide einstückig aus Sphäroguss GGG60 gefertigt sind. Das Unterteil 110 des Maschinengestells 100 umfasst eine Grundplatte 111 mit im Wesentlichen kreisringförmiger Grundfläche. Die Grundplatte 111 und damit die Rundtaktmaschine 1 werden von einem Grundgestell 112 getragen. Im Zentrum der Grundplatte 111 aufgenommen und sich davon ausgehend sowohl vertikal nach unten als auch nach oben erstreckend ist ein zylindrischer Abschnitt 113, welcher konzentrisch ist mit der Grundplatte 111 und dessen Durchmesser ungefähr der Hälfte des Durchmessers der Grundplatte 111 entspricht. Aussen an diesem zylindrischen Abschnitt 113 sind mit einem Winkelabstand von jeweils 30° vertikal orientierte Stützstreben 114.1...114.12 angeordnet. Diese umfassen einen unteren Abschnitt mit konstanter radialer Ausdehnung sowie einen sich daran anschliessenden oberen Abschnitt mit sich nach oben erweiternder radialer Ausdehnung. Alle Stützstreben 114.1...114.12 sind an ihrem oberen Ende durch einen Verbindungsring 115 (siehe Figuren 3, 4B) miteinander verbunden. Dessen Durchmesser ist geringer als die radiale Ausdehnung der Stützstreben 114.1...114.12. Zwischen benachbarten Stützstreben 114.1...114.12 sind im oberen, sich radial erweiternden Abschnitt Öffnungen 116.1...116.12 vorhanden.

Auf dem Verbindungsring 115 und den radial weiter nach aussen ragenden Abschnitten der Stützstreben 114.1...114.12 ist der Oberteil 150 des Maschinengestells 100 gelagert (siehe auch Figur 4A). Dieser weist eine entsprechend der Anordnung der Stützstreben 114.1...114.5 des Unterteils 110 zwölfeckige Grundfläche auf und umfasst einen unteren Verbindungsring 151, einen oberen Verbindungsring 152 sowie die beiden Ringe verbindende, L-förmige Streben 153.1...153.12. Der Durchmesser des unteren Verbindungsrings 151 entspricht im Wesentlichen der radialen Ausdehnung der Stützstreben 114.1...114.12 des Unterteils 110 des Maschinengestells 100. Der Durchmesser des oberen Verbindungsrings 152 ist geringer, dessen Aussendurchmesser beträgt etwa die Hälfte des Aussendurchmessers des unteren Verbindungsrings 151. Die L-förmigen Streben 153.1...153.12 des Oberteils 150 verlaufen ausgehend vom unteren Verbindungsring 151 zunächst vertikal nach oben, sind dann um 90° nach innen abgeknickt und treffen schliesslich auf den oberen Verbindungsring 152. Zwischen jeweils benachbarten L-förmigen Streben 153.1...153.12 sind am Oberteil 150 des Maschinengestells 100 zwölf Öffnungen 154.1...154.12 gebildet. In jede dieser Öffnungen 154.1...154.12 ist eine Unterteilungsplatte 155.1...155.12 eingesetzt, welche die Öffnung 154.1...154.12 in eine umfangsseitige, vertikal verlaufende Öffnung sowie eine auf der Oberseite horizontal verlaufende Öffnung unterteilt.

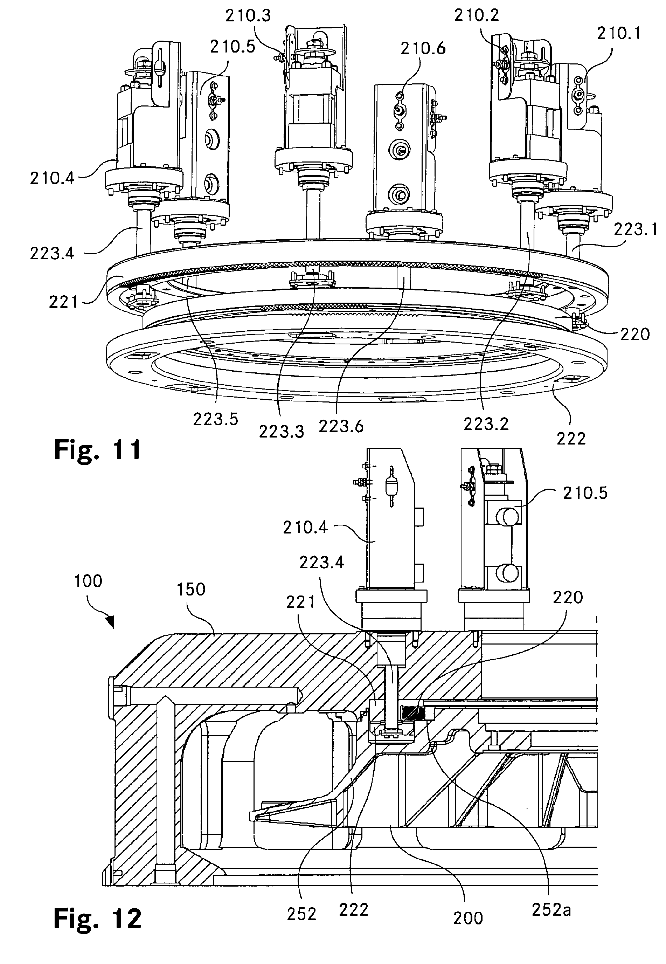

In das Maschinengestell 100 ist ein Drehtisch 200 eingesetzt. Dieser umfasst eine vertikale Schaltachse, welche durch einen Direktantrieb (torque motor) 201 betätigt wird. Der Stator des Direktantriebs ist fest mit dem Maschinengestell 100 verbunden, während der Rotor fest mit dem Rundtisch 200 verbunden ist. Mit einem geeigneten Direktantrieb des Typs MBT450E der Firma Bosch Rexroth AG, Lohr (Deutschland) kann beispielsweise eine Schaltgeschwindigkeit von lediglich 0.6 s zwischen benachbarten Positionen (30°) erreicht werden. Der Direktantrieb 201 und mit ihm der Drehtisch 200 sind im oberen Verbindungsring 152 des Oberteils 150 des Maschinengestells 100 aufgenommen. Der Drehtisch 200 umfasst neben dem Direktantrieb 201 eine horizontal orientierte, runde Trägerplatte 202 mit mehreren Werkstückaufnahmen 203. Auf der Oberseite des Maschinengestells 100, im Bereich des oberen Verbindungsrings 152 des Oberteils 150, sind mit jeweils gleichem Winkelabstand sechs hydraulische Einheiten 210.1...210.6 angeordnet. Diese dienen - wie weiter hinten im Zusammenhang mit den Figuren 11 und 12 dargestellt ist - zum Festsetzen des Drehtischs 200 am Maschinengestell 100.

Der Drehtisch 200 umfasst im Weiteren einen rotierenden elektrischen Kollektor zur Signal- und Energieübertragung an Komponenten der Werkstückaufnahmen 203 am Drehtisch 200, sowie einen rotierenden hydraulischen Kollektor, an welchen mit dem Drehtisch 200 mitrotierende Ventile zum Anschluss von Hydraulikleitungen gekoppelt sind.

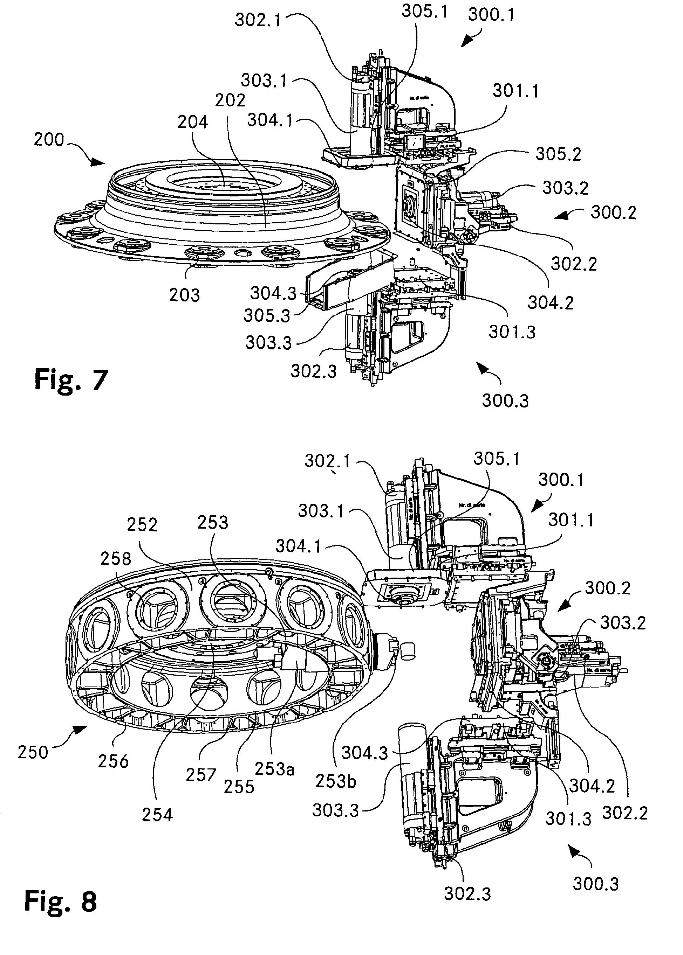

In das Maschinengestell 100 eingesetzt sind drei Bearbeitungseinheiten 300.1, 300.2, 300.3. Diese sind alle in die Öffnungen desselben Sektors des Maschinengestells 100 eingesetzt. Die untere Bearbeitungseinheit 300.3 reicht dabei durch die Öffnung 116.5 des Unterteils 110 nach oben in den Bereich des Drehtischs 200. Die mittlere und obere Bearbeitungseinheit 300.2, 300.1 greifen durch die mittels der Unterteilungsplatte 155.5 unterteilte Öffnung 154.5 radial von der Aussenseite bzw. vertikal von oben in den Raum innerhalb des Maschinengestells 100 ein. Die Bearbeitungseinheiten 300.1, 300.2, welche durch Öffnungen 154.1...154.2 des Oberteils 150 in den Raum innerhalb des Maschinengestells 100 eingreifen, sind in den die Öffnungen 154.1...154.12 begrenzenden Streben befestigt. Die Bearbeitungseinheiten 300.3, welche durch Öffnungen 116.1...116.12 in den Raum innerhalb des Maschinengestells 100 eingreifen, sind ebenfalls am Oberteil 150, nämlich an dessen unteren Verbindungsring 151, befestigt. Die Bearbeitungseinheiten 300.1, 300.2, 300.3 sind in Zusammenhang mit den Figuren 7 und 8 eingehender beschrieben.

Am Maschinengestell 100 können bis zu 36 Bearbeitungseinheiten 300 (12 Sektoren zu 3 Einheiten) angeordnet werden. In der Regel werden aber nicht in jedem Sektor drei Bearbeitungseinheiten 300 benötigt, weil das auf dem Drehtisch von Sektor zu Sektor transportierte Werkstück nicht an jeder Stelle sowohl von unten, von aussen als auch von oben bearbeitet werden muss. Entsprechend nicht benötigte Öffnungen 116.1...116.12, 154.1...154.12 werden durch passende Abdeckplatten verschlossen.

Das Maschinengestell 100 und die daran gehaltenen Bearbeitungseinheiten 300 werden von einer Kabine 400 allseitig umschlossen. Die im Wesentlichen um eine vertikale Achse rotationssymmetrische Kabine 400 ist auf der Grundplatte 111 des Unterteils 110 abgestützt und erstreckt sich davon ausgehend in einem Abschnitt 402 zylindrisch nach oben. Am oberen Ende der Rundtaktmaschine 1 geht der Abschnitt 402 in einen Deckenteil 404 über.

Zwischen der Kabine 400 und dem Maschinengestell 100 bzw. den Bearbeitungseinheiten 300.1, 300.2, 300.3 ist ein Zwischenraum 2 gebildet, welcher - wie nachfolgend dargestellt - mittels einer Kühleinrichtung auf eine vorgegebene Temperatur gebracht werden kann. Innerhalb des Maschinengestells, im Bereich der Werkstückaufnahmen 203 des Drehtischs 200 und der Arbeitsspindeln der Bearbeitungseinheiten 300.1, 300.2, 300.3 ist ein Arbeitsraum 3 gebildet, welcher nach unten hin in einen Kanal 4 zum Abtransport von Spänen und Kühlflüssigkeit übergeht. Der Zwischenraum 2 ist von der Aussenwelt durch die Kabine 400 getrennt, der Arbeitsraum 3 vom Zwischenraum 2 durch das Maschinengestell 100, die Bearbeitungseinheiten 300.1, 300.2, 300.3 und gegebenenfalls durch Abdeckplatten, welche nicht benutzte Öffnungen 116.1...116.12, 154.1...154.12 verschliessen. Bei einer möglichen Ausführungsform der erfindungsgemässen Rundtaktmaschine 1 mit einem Aussendurchmesser des Maschinengestells von ca. 2.25 m ergibt sich ein Gesamtvolumen des Zwischenraums 2 von ca. 9 m³ sowie ein Gesamtvolumen des Arbeitsraums 3 (ohne Kanal 4) von ca. 1 m³.

Der Eingang des Kanals 4 ist trichterartig ausgebildet. Die im Arbeitsraum 3 anfallenden Späne werden zusammen mit der in den Arbeitsraum 3 eingespritzten Kühlflüssigkeit und unterstützt durch die Einwirkung der Schwerkraft in den Kanal 4 gespült. An dessen untere Öffnung schliesst sich eine an sich bekannte Spänefördereinrichtung zum Wegtransportieren der Späne und der Kühlflüssigkeit an. Das Gemisch aus Staub, Spänen und Kühlflüssigkeit kann anschliessend gefiltert werden, so dass die Kühlflüssigkeit rezykliert werden kann.

Die Figur 2 zeigt eine Aussenansicht der Rundtaktmaschine. Das Maschinengestell 100 mitsamt dem darin aufgenommenen Drehtisch 200 und allen daran gehaltenen Bearbeitungseinheiten 300 ist von der Kabine 400 allseitig umschlossen. Die Kabine 400 ist im Wesentlichen rotationssymmetrisch. Sie weist neben der eigentlichen, auch in der Figur 3 dargestellten, Kabine einen zylindrisch geformten Sockel 401 auf. Daran schliesst sich nach oben, im Bereich des zylindrischen Abschnitts 113 des Unterteils 110, der zylindrische Abschnitt 402 der Kabine 400 an, in welchem eine Reihe von Sichtfenstern 403 ausgebildet sind, durch welche die Situation im Innern der Kabine 400 überwacht werden kann. Die Kabine 400 ist oben durch den Deckenteil 404 abgeschlossen. Sie weist mehrere gegeneinander und um die Symmetrieachse der Kabine 400 verschwenkbare Segmente auf, so dass sie für die Inspektion, den Unterhalt oder das Umrüsten auf einfache Weise geöffnet werden kann.

Die Figur 5 zeigt einen vertikalen Querschnitt durch den Oberteil 150 des Maschinengestells mit darin verlaufenden Kühlleitungen. Die Kühlleitungen 156 verlaufen in den vertikalen bzw. horizontalen Abschnitten aller Streben 153.6, 153.12 des Oberteils 150. Sie sind durch Bohrungen 156a, 156b gebildet, welche vertikal von unten bzw. radial von aussen her in jeweils derselben Ebene in die Abschnitte gebohrt sind, sich T-förmig treffen und somit zum Leiten der Kühlflüssigkeit miteinander verbunden sind. Die horizontale Bohrung 156b ist an der Aussenseite der Strebe 153.6, 153.12 mit einem Stopfen verschlossen. Die Kühlflüssigkeit wird von unten her in die vertikale Bohrung 156a der Kühlleitung 156 eingeleitet, fliesst durch diese nach oben bis in die horizontale Bohrung 156b und verteilt sich dann sowohl in den bezüglich der T-Verzweigung äusseren als auch in den inneren Teil der horizontalen Bohrung 156b. Somit wird eine gleichmässige Kühlung der T-förmigen Streben 153.6, 153.12 erreicht. Die horizontalen Bohrungen 156b münden in Düsen 157, durch welche Kühlflüssigkeit in den Arbeitsraum 3 gesprüht wird. Ein weiterer Kühlkanal 158 eines geschlossenen Kühlsystems ist umlaufend um den oberen Verbindungsring 152 des Oberteils 150 des Maschinengestells angeordnet und kühlt somit einerseits den Bereich des oberen Verbindungsrings 152 des Oberteils 150 und andererseits die Aufnahme für den Drehtisch und damit mittelbar auch den darin aufgenommenen Direktantrieb des Drehtischs (siehe unten). Durch die Kühlleitungen 156 in allen Streben 153 und im oberen Verbindungsring 152 kann eine effektive und homogene Wärmeabfuhr aus dem Maschinengestell erzielt werden. Dadurch und durch den im Wesentlichen rotationssymmetrischen Aufbau des Maschinengestells können thermische Auswirkungen auf die Positionsgenauigkeit der Maschine (z. B. durch unterschiedliche thermische Ausdehnung verschiedener Teile des Maschinengestells) minimiert werden. Das Maschinengestell ist sowohl durch seine Geometrie als auch thermisch stabilisiert.

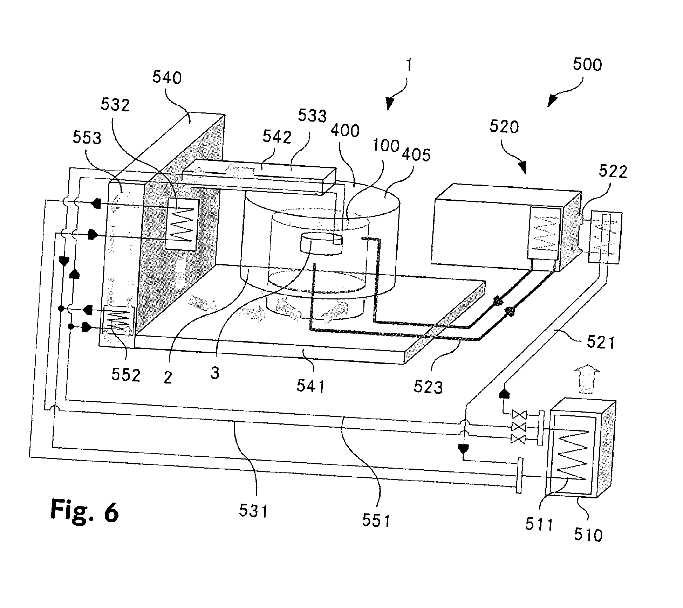

Die Figur 6 ist eine schematische Darstellung des Kühlsystems 500 der Rundtaktmaschine 1. Das Kühlsystem 500 umfasst eine zentrale Kühleinheit 510 mit einem Wärmetauscher 511, welcher im Kühlsystem 500 aufgenommene Wärme abgeben kann, beispielsweise an die Aussenluft. Mit der zentralen Kühleinheit 510 ist über einen geschlossenen Kreislauf 521 eine Schneidflüssigkeits-Kühleinheit 520 verbunden. In dieser wird über einen Wärmetauscher 522 die in einem Kreislauf 523 zirkulierende Schneidflüssigkeit abgekühlt. Die Schneidflüssigkeit wird durch die Bohrungen im Maschinengestell 100 hindurch über Düsen (siehe Figur 5) in den Arbeitsraum 3 eingeleitet, kühlt dort sowohl den Arbeitsraum 3 und die umgebenden Bereiche des Maschinengestells 100 als auch die bearbeiteten Werkstücke. Die Schneidflüssigkeit kann zusätzlich direkt den Arbeitsspindeln der Bearbeitungseinheiten zugeführt werden. Sie fliesst zunächst durch mehrere umfangsseitig angeordnete, längs der Arbeitsspindel entlang verlaufende Kühlkanäle und tritt dann durch Auslässe im Bereich der Bearbeitungswerkzeuge aus. Die Werkzeuge selbst (z. B. Schneid-oder Bohrwerkzeuge) können weitere Kühlleitungen umfassen, welche durch die Schneidflüssigkeit durchflossen werden, bevor diese in den Bereich der Arbeitsstelle abgegeben wird. Durch die Spindelkühlung wird eine präzise Temperaturkontrolle der Arbeitsspindeln und der Bearbeitungswerkzeuge ermöglicht, die Aufwärmzeit wird reduziert und der Wegtransport von Staub und Spänen von der Arbeitsstelle wird optimiert. Sowohl die durch die Arbeitsspindeln als auch die durch die Düsen am Maschinengestell 100 abgegebene Schneidflüssigkeit dient auch zum Spülen des Arbeitsraums 3, d. h. zum Binden und Wegtransportieren des bei der Bearbeitung gebildeten Staubs und der Späne. Nach Durchgang einer Filtereinheit (nicht dargestellt), gelangt die Schneidflüssigkeit im Kreislauf 523 wiederum in die Schneidflüssigkeits-Kühleinheit 520.

Ebenfalls über einen geschlossenen Kreislauf 531 sowie einen Wärmetauscher 532 mit der zentralen Kühleinheit 510 gekoppelt ist ein Kühlkreislauf 533 für die Luftkühlung des Zwischenraums 2 zwischen der Kabine 400 und dem Maschinengestell 100. Der Wärmetauscher 532 ist in einem Gehäuse 540 untergebracht, welches daneben auch die Schaltschränke für die Rundtaktmaschine 1 beherbergt. Das Gehäuse 540 ist zusammen mit der Rundtaktmaschine 1 selbst an einer Grundplatte 541 angeordnet, vom Gehäuse 540 erstreckt sich zudem ein horizontaler Arm 542 zum Deckenteil 405 der Kabine 400. Nach dem Durchgang durch den Wärmetauscher 532 gelangt die abgekühlte Umgebungsluft zunächst durch einen Kanal in der Grundplatte 541 und durch entsprechende Durchgänge im Boden der Kabine 400 in den Zwischenraum 2 zwischen der Kabine 400 und dem Maschinengestell 100. Mit ihrer Hilfe wird der Zwischenraum 2 auf eine vorgegebene Temperatur gebracht, die Luft kühlt somit das Maschinengestell 100 sowie die daran befestigten Bearbeitungseinheiten. Im Deckenteil 405 der Kabine 400 wird die erwärmte Luft wieder abgesaugt und durch den Arm 542 wieder in den Wärmetauscher 532 im Gehäuse 540 zur erneuten Abkühlung zurück transportiert.

Im Gehäuse 540 ist ein weiterer, mit der zentralen Kühleinheit 510 über einen Kreislauf 551 verbundener, Wärmetauscher 552 angeordnet, welcher mit einem Kühlluft-Kreislauf 553 zur Kühlung der im Gehäuse 540 untergebrachten Schaltschränke zusammenwirkt.

Das Kühlsystem 500 umfasst weiter eine Steuerung. Diese ist an eine Reihe von Temperatursensoren gekoppelt, welche die Temperatur an verschiedenen Stellen des Arbeitsraums 3 sowie des Zwischenraums 4 und auch die Temperatur der Kühlflüssigkeiten in den verschiedenen Kühlkreisläufen erfassen. Abhängig von den gemessenen Werten können die Parameter des Kühlsystems (Kühlflüssigkeitsdurchsatz, Kühlgas-Umwälzung, Umwälzung einer Austauschflüssigkeit etc.) angepasst werden, um die vorgegebenen Temperaturen zu halten.

Die Figur 7 ist eine Schrägansicht des Drehtischs 200 mit vertikal orientierten Werkstückaufnahmen 203 und zugeordneten Bearbeitungseinheiten 300.1, 300.2, 300.3. Der Drehtisch 200 umfasst eine Trägerplatte 202 mit einer zentralen Öffnung 204, in welcher die Achse des Direktantriebs gehalten ist. Die Trägerplatte 202 weist umfangsseitig einen Trägerabschnitt auf mit regelmässig angeordneten, vertikal durchgehenden Öffnungen, in welchem die Werkstückaufnahmen 203 befestigt sind. Die Anzahl der Werkstückaufnahmen 203 entspricht der Anzahl der Sektoren des Maschinengestells, so dass benachbarte Werkstückaufnahmen 203 von in benachbarten Sektoren angeordneten Bearbeitungseinheiten 300.1, 300.2, 300.3 bearbeitet werden können. Je nach der vorzunehmenden Bearbeitung können die Werkstückaufnahmen 203 einen Antrieb zum individuellen Drehen der Werkstücke um eine vertikale Achse aufweisen, so dass eine flexiblere Positionierung der Werkstücke sowie eine Änderung von deren Orientierung während dem Bearbeitungsprozess ermöglicht wird.

Jede der drei Bearbeitungseinheiten 300.1, 300.2, 300.3 ermöglicht Bewegungen des jeweiligen Bearbeitungswerkzeugs mit drei translatorischen Freiheitsgraden. Die zwei von unten bzw. von oben auf die Werkstücke einwirkenden Bearbeitungseinheiten 300.1, 300.3 sind im Wesentlichen gleich aufgebaut. Sie umfassen eine in befestigtem Zustand horizontal orientierte Befestigungskonsole 301.1, 301.3, welche an entsprechenden Bohrungen am Maschinengestell verschraubt werden kann (siehe auch Figur 3). Relativ zu dieser Befestigungskonsole 301.1, 301.3 ist ein Turmelement 302.1, 302.3 der Bearbeitungseinheiten 300.1, 300.3 in einer horizontalen Ebene entlang von zwei senkrecht aufeinander stehenden Linearachsen bewegbar. Dazu sind zwischen der Befestigungskonsole 301.1, 301.3 und dem Turmelement 302.1, 302.3 lineare Kugelumlauf-Führungen vorgesehen. Der maximale Bewegungsweg entlang dieser beiden Achsen beträgt je 60 mm.

Am Turmelement 302.1, 302.3 ist ein Werkzeugkopf 303.1, 303.3 in vertikaler Richtung verschiebbar angeordnet. Dazu ist zwischen dem Turmelement 302.1, 302.3 und dem Werkzeugkopf 303.1, 303.3 eine Linearführung mit einer Führungsschiene und einem damit zusammenwirkenden Rollenkäfig vorgesehen. Der maximale Verstellweg in vertikaler Richtung beträgt 120 mm. Gesteuert von einer an sich bekannten CNC-Maschinensteuerung werden die drei Achsen der Bearbeitungseinheiten 300.1, 300.3 durch elektrische Stellantriebe betätigt, es ist eine maximale Achsengeschwindigkeit von 20 m/min erreichbar sowie eine Positionsgenauigkeit von ± 5 µm mit einer Streuung von lediglich ± 2 µm. Am Werkzeugkopf 303.1, 303.3 ist eine Arbeitsspindel 304.1, 304.3 mit einem Aussendurchmesser von 100 mm angeordnet. Um den Arbeitsraum zum Zwischenraum dicht abzuschliessen, greifen die Arbeitsspindeln 304.1, 304.3 durch ein Trennelement 305.1, 305.3 in den Arbeitsraum 3 hinein. Der Abstand der beiden gegenüberliegenden Bearbeitungseinheiten 300.1, 300.3 und damit die Höhe des Arbeitsraums 3 betragen ca. 60 cm

Die horizontal seitlich einwirkende Bearbeitungseinheit 300.2 ist mit dem vertikal orientierten Trennelement 305.2, welches gleichzeitig als Befestigungskonsole dient, am Maschinengestell befestigt. Bezüglich dieses Trennelements 305.2 ist ein auf seiner Rückseite angeordnetes Turmelement 302.2 in einer vertikalen Ebene entlang von zwei senkrecht aufeinander stehenden Linearachsen bewegbar. Dazu sind zwischen dem Rahmen des Trennelements 305.2 und dem Turmelement 302.2 lineare Kugelumlauf-Führungen vorgesehen. Der maximale Bewegungsweg entlang dieser beiden Achsen beträgt je 60 mm. Am Turmelement 302.2 ist ein Werkzeugkopf 303.2 mit einer Arbeitsspindel 304.2 in horizontaler Richtung verschiebbar angeordnet. Dazu ist zwischen dem Turmelement 302.2 und dem Werkzeugkopf 303.2 eine Linearführung mit einer Führungsschiene und einem damit zusammenwirkenden Rollenkäfig vorgesehen. Der maximale Verstellweg in horizontaler Richtung beträgt 120 mm. Wiederum werden die drei Achsen von einer CNC-Maschinensteuerung durch elektrische Stellantriebe betätigt, die erreichbare Genauigkeit und Geschwindigkeit entsprechen den Werten der vertikal wirkenden Bearbeitungseinheiten 300.1, 300.2.

Die Figur 8 ist eine Schrägansicht eines Drehtischs 250 mit horizontal orientierten Werkstückspindeln und zugeordneten Bearbeitungseinheiten 300.1, 300.2, 300.3. Die Bearbeitungseinheiten 300.1, 300.2, 300.3 sind identisch mit den in der Figur 7 dargestellten und im Zusammenhang damit beschriebenen Bearbeitungseinheiten, wobei zugunsten einer besseren Einsicht in die Einheiten bei der Darstellung die Abdeckungen der Werkzeugköpfe weggelassen wurden. Der Drehtisch 250 umfasst eine Trägerplatte 252 mit einer zentralen Öffnung 254, in welcher die Achse des Direktantriebs gehalten ist. An der Trägerplatte 252 sind umfangsseitig zwei konzentrische Ringmäntel 255, 256 angeordnet, welche durch radiale Stützstreben 257 miteinander verbunden sind. In den Ringmänteln 255, 256 sind radial orientierte, durchgehende Öffnungen 258 ausgeschnitten, welche Aufnahmen für die Werkstückaufnahmen 253 bilden. Zugunsten einer besseren Übersichtlichkeit ist in der Figur 8 nur gerade eine Werkstückaufnahme 253 dargestellt, im Drehtisch 250 können aber bis zu zwölf Einheiten Platz finden, d. h. für jeden Sektor der Rundtaktmaschine kann eine derartige Werkstückaufnahme 253 vorgesehen sein.

Die Werkstückaufnahme 253 umfasst eine elektrische Spindel 253a mit radial horizontal orientierter Spindelachse. Am radial äusseren Ende der Spindel 253a ist eine selbstzentrierende Klemmeinrichtung 253b zur Aufnahme des Werkstücks angeordnet, welche sich mittels der Spindel 253a um die Spindelachse in eine gewünschte Position drehen lässt. Sobald diese erreicht ist, kann die Klemmeinrichtung 253b mittels einer hydraulischen Bremse in dieser Drehposition festgesetzt werden. Für die Positionierung des zu bearbeitenden Werkstücks können somit ausgehend von der Maschinensteuerung die Bewegungen entlang der drei Achsen der Bearbeitungseinheiten 300.1, 300.2, 300.3 und die Drehbewegung der Spindel 253a überlagert werden. Die Klemmeinrichtung 253b lässt sich durch hydraulische Betätigung öffnen, damit das Werkstück entnommen und ein neues Werkstück aufgenommen werden kann.

Am äusseren Ende der Spindel 253a können je nach Bedarf anstelle der Klemmeinrichtung 253b andere Einrichtungen zur Aufnahme des Werkstücks angebracht werden, beispielsweise eine um die Spindelachse schwenkbare oder drehfeste Klemmbuchse, deren Achse senkrecht auf der radialen Spindelachse steht, wobei die Klemmbuchse um diese Achse drehfest oder rotierend ausgebildet sein kann. Die Einrichtungen können auswechselbar ausgebildet sein, so dass die Maschine einfachstmöglich umgerüstet werden kann. Dazu umfassen mit Vorteil die Spindel 253a und die Klemmeinrichtung 253b an der einander zugewandten Fläche komplementäre Hirth-Verzahnungen, mittels welchen die angetriebene Achse der Spindel 253a mit der Klemmeinrichtung oder einer Welle der Einrichtung gekoppelt werden kann.

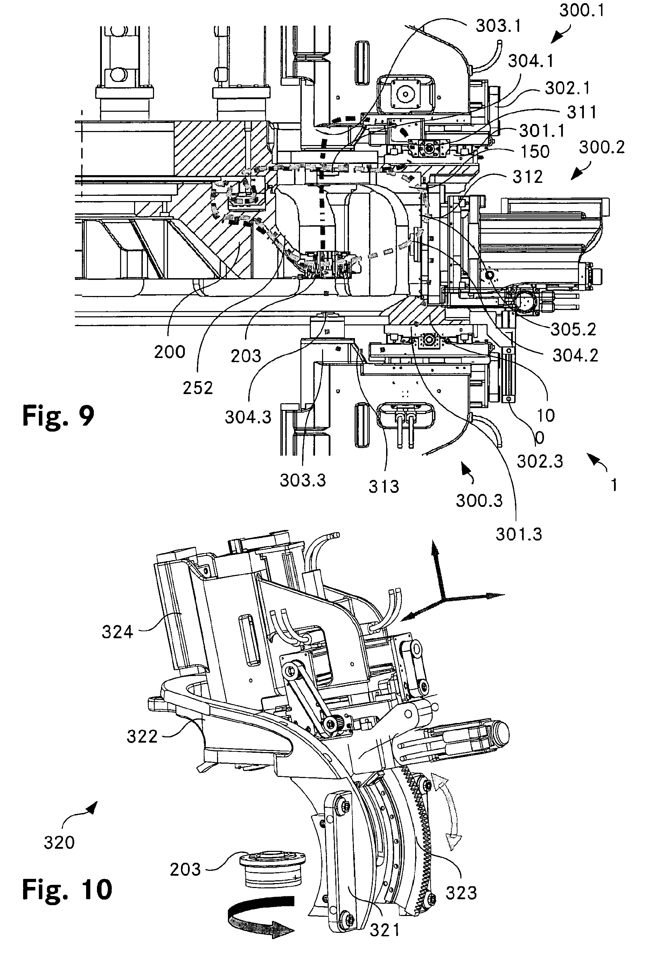

Die Figur 9 zeigt ein vergrösserte Darstellung eines vertikalen Querschnitts durch den Arbeitsraum 3 der Rundtaktmaschine 1, wobei drei Bearbeitungseinheiten 300.1, 300.2, 300.3, wie in den vorangegangenen Figuren dargestellt, am Maschinengestell 100 angebracht sind und wobei ein Drehtisch 200 mit vertikal orientierten Werkstückaufnahmen 203 zum Einsatz gelangt. Durch die erfindungsgemässe Geometrie des Maschinengestells 100 und des Drehtischs 200 wird ein kompakter Aufbau der Rundtaktmaschine 1 ermöglicht. Gleichzeitig werden auch die an den Arbeitsspindeln 304.1, 304.2, 304.3 bzw. an den Werkstückaufnahmen 203 auftretenden Kräfte möglichst direkt am Maschinengestell 100 abgestützt, so dass Verwindungen und damit einhergehende Positionsungenauigkeiten weitgehend unterdrückt werden können.

In der Figur 9 sind die Kraftflüsse für Kräfte zwischen dem Werkstück und der vertikal wirkenden oberen Bearbeitungseinheit 300.1 (Kraftfluss 311), zwischen dem Werkstück und der horizontal wirkenden seitlichen Bearbeitungseinheit 300.2 (Kraftfluss 312) sowie zwischen dem Werkstück und der vertikal wirkenden unteren Bearbeitungseinheit 300.3 (Kraftfluss 313) eingezeichnet. Die Kraftflüsse 311, 312, 313 verlaufen im Wesentlichen in der dargestellten vertikalen Ebene, welche durch die Achsen der Bearbeitungswerkzeuge verläuft. Auf das Werkstück wirkende Kräfte werden immer zunächst radial durch die Trägerplatte 252 und die Verankerung (siehe unten) auf das Maschinengestell 100 übertragen. Kräfte, die zwischen dem Werkstück und der vertikal wirkenden oberen Bearbeitungseinheit 300.1 auftreten, werden durch den Werkzeugkopf 303.1 der Bearbeitungseinheit 300.1 weiter auf das Turmelement 302.1 und die Befestigungskonsole 301.1 auf den Oberteil 150 des Maschinengestells 100 übertragen. Kräfte, die zwischen dem Werkstück und der horizontal wirkenden seitlichen Bearbeitungseinheit 300.2 auftreten, können direkt über das Trennelement 305.2 auf den Oberteil 150 des Maschinengestells 100 übertragen werden. Kräfte, die zwischen dem Werkstück und der vertikal wirkenden unteren Bearbeitungseinheit 300.3 auftreten, werden ähnlich wie bei der oberen Bearbeitungseinheit 300.1 zunächst über den Werkzeugkopf 303.3 auf das Turmelement 302.3 und von diesem über die Befestigungskonsole 301.3 auf das Maschinengestell 100 übertragen. Zusammen mit der thermischen Stabilität des Maschinengestells ergibt sich auch bei verhältnismässig grossen rückwirkenden Kräften eine hohe Positionsgenauigkeit der erfindungsgemässen Rundtaktmaschine 1.

Die Figur 10 zeigt eine Schrägansicht einer schwenkbaren Bearbeitungseinheit 320. Diese kann nach Entfernen der Unterteilungsplatte in eine der Öffnungen 154.1...154.12 im Oberteil 150 des Maschinengestells 100 (siehe Figur 4A) eingesetzt werden. Die schwenkbare Bearbeitungseinheit 320 umfasst eine Haltekonsole 321, welche seitlich am Maschinengestell 100, an der Umrandung der Öffnung 154, befestigbar ist. Fest mit dieser Haltekonsole 321 verbunden ist ein Rahmen 322, welcher sich in angebrachtem Zustand der Bearbeitungseinheit 320 entlang des Oberteils 150 des Maschinengestells 100 bis auf dessen Oberseite erstreckt und die Öffnung 154 somit ganz umschliesst. Innerhalb des Rahmens 322 auf einer Schwenkführung 323 befestigt ist ein Maschinenkopf 324. Dieser lässt sich bezüglich der Schwenkführung 323 entlang von drei senkrecht aufeinander stehenden, linearen Achsen bewegen, so dass neben der Einwirkrichtung auf das Werkstück, welche im Wesentlichen von horizontal bis vertikal beliebig einstellbar ist, auch der Einwirkort (innerhalb der gegebenen Grenzen) beliebig wählbar ist. Eine fünfte Achse kann durch eine entsprechende Werkstückaufnahme 203 am Drehtisch realisiert werden. Diese kann beispielsweise um eine vertikale Drehachse umfassen. Die Bearbeitungseinheit 320 und die Werkstückaufnahme 203 ermöglichen somit in, Zusammenwirkung eine flexible 5-Achsen-Positionierung. In demselben Sektor kann neben der in der Öffnung des Oberteils befestigten schwenkbaren Bearbeitungseinheit 320 in der Öffnung des Unterteils des Maschinengestells weiter eine Bearbeitungseinheit mit drei Achsen gemäss Figur 7 oder 8 eingesetzt sein.

Im Rahmen der Erfindung lassen sich verschiedenartige Bearbeitungseinheiten sowie verschiedenartige Werkstückaufnahmen weitgehend frei kombinieren. So können in bestimmten Sektoren des Maschinengestells drei Bearbeitungseinheiten, wie beispielsweise in Figur 8 dargestellt, angeordnet sein, während in anderen Sektoren nur eine oder zwei Einheiten oder aber eine schwenkbare Einheit wie in Figur 10 dargestellt vorhanden sind. In weiteren Sektoren können schliesslich die Bearbeitungseinheiten ganz fehlen. Auf ähnlich Weise lassen sich an demselben Drehtisch ohne weiteres verschiedenartige Werkstückaufnahmen kombinieren.

Die Figur 11 zeigt eine Schrägansicht der Einrichtung zum Festsetzen des Drehtischs 200 am Maschinengestell 100; die Figur 12 zeigt einen vertikalen Querschnitt durch diese Einrichtung. Am Drehtisch 200 ist auf der Oberseite der Trägerplatte 252 ein erster Ring 220 mit einer Hirth-Verzahnung drehfest angebracht. Der Ring 220 liegt mit seiner Unterseite teilweise auf einer entsprechenden umlaufenden Ausnehmung 252a der Trägerplatte 252 auf und ist in diesem Bereich auch mit der Trägerplatte 252 verbunden, beispielsweise durch eine Mehrzahl von Schraubverbindungen. Der äussere Bereich der Unterseite des Rings 220 ragt über den entsprechenden Abschnitt der Trägerplatte 252 hinaus und ist somit von unten her zugänglich.

Ein zweiter Ring 221 mit Hirth-Verzahnung ist drehfest am Oberteil 150 des Maschinengestells befestigt. Der zweite Ring weist in einer radialen, vertikalen Ebene einen im Wesentlichen L-förmigen Querschnitt auf, wobei ein Schenkel an der Unterseite des horizontalen Abschnitts des Oberteils 150 befestigt ist und wobei der zweite Schenkel sich davon ausgehend in einem äusseren Bereich des zweiten Rings 221 nach unten erstreckt, auf den Drehtisch 200 zu. Auf der Unterseite des zweiten Schenkels ist die Hirth-Verzahnung ausgebildet. Ein dritter Ring 222 ist durch sechs Haltestangen 223.1...223.6 mit je einer der oben auf dem Maschinengestell 100 angeordneten hydraulischen Einheiten 210.1...210.6 verbunden. Er weist eine Hirth-Verzahnung auf seiner Oberseite auf. Der Aussendurchmesser des dritten Rings 222 entspricht ungefähr dem Aussendurchmesser des am Maschinengestell 100 befestigten zweiten Rings 221, sein Innendurchmesser ungefähr dem Innendurchmesser des am Drehtisch 200 befestigten ersten Rings 220. Die Haltestangen 223.1...223.6 treten durch den Oberteil 150 des Maschinengestells 100 sowie durch passende Öffnungen im zweiten Ring 221 und im dritten Ring 222 hindurch und sind an der Unterseite des dritten Rings 222 in tangentialer Richtung verschiebbar an diesem gelagert. Zu diesem Zweck sind die im dritten Ring 222 vorhandenen Öffnungen kreisabschnittartig, und die Haltestangen 223.1...223.6 weisen an ihrem unteren Ende Teller auf, auf welchen der dritte Ring 222 abgestützt ist.

In der in der Figur 11 dargestellten offenen Stellung haben der erste Ringe 220 und der zweite Ring 222 keine Wechselwirkung. Der Drehtisch 200 kann bezüglich des Maschinengestells 100 frei gedreht werden. Durch Anheben des dritten Rings 222 mittels der hydraulischen Einheiten 210.1...210.6 gelangt dieser nun sowohl mit dem ersten als auch mit dem zweiten Ring 220, 221 in Eingriff und verankert somit den Drehtisch 200 drehfest am Maschinengestell 100. Gleichzeitig wird sichergestellt, dass der Drehtisch 200 bezüglich dem Maschinengestell 100 eine definierte vertikale Position einnimmt. Bei den nachfolgenden Bearbeitungsschritten kann somit eine hohe Positionsgenauigkeit erzielt werden.

Die vorstehend beschriebene Ausführungsform einer erfindungsgemässen Rundtaktmaschine kann in vielerlei Hinsicht abgewandelt werden. So kann beispielsweise das Maschinengestell aus einer grösseren Anzahl von Bauelementen zusammengesetzt oder aus einem anderen Material hergestellt sein. Insbesondere die Anzahl, Form und Anordnung der Öffnungen zur Aufnahme von Bearbeitungseinheiten können ebenfalls variiert werden. Die Bearbeitungseinheiten selbst und deren Bestandteile können hinsichtlich des Einsatzbereichs der Rundtaktmaschine ebenfalls Änderungen und Modifikationen erfahren.

Das Kühlsystem kann - wie oben ausgeführt - auch zur Erwärmung der Maschine eingesetzt werden, insbesondere in einer warm-up-Phase, es kann auch weitere Teilsysteme zur gezielten Temperierung weiterer Komponenten umfassen. Je nach der zu erwartenden Wärmeentwicklung in der Maschine und je nach den thermischen Erfordernissen können auch gewisse der dargestellten Teilsysteme fehlen. Auch der Drehtisch sowie die Einrichtung zum Festsetzen des Drehtischs am Maschinengestell können andersartig ausgeführt sein als im Rahmen des Ausführungsbeispiels dargestellt.

Zusammenfassend ist festzustellen, dass durch die Erfindung eine Rundtaktmaschine geschaffen wird, welche hinsichtlich ihrer thermischen Stabilität verbessert ist.

## Patentansprüche

1. Rundtaktmaschine (1) mit
a) einem ortsfesten, zum Haltern einer Mehrzahl von Bearbeitungseinheiten (300.1, 300.2, 300.3, 320) ausgebildeten Maschinengestell (100),
b) einem bezüglich des Maschinengestells (100) um eine, insbesondere vertikale, Schaltachse drehbaren Rundtisch (200), welcher zumindest teilweise innerhalb des Maschinengestells (100) angeordnet ist und mindestens eine Aufnahme (203) für ein durch die Bearbeitungseinheiten (300.1, 300.2, 300.3, 320) zu bearbeitendes Werkstück aufweist,
**dadurch gekennzeichnet, dass**
c) innerhalb des Maschinengestells (100) ein im Wesentlichen abgeschlossener Arbeitsraum (3) gebildet ist;
d) die Rundtaktmaschine eine im Wesentlichen geschlossene Kabine (400) umfasst, welche das Maschinengestell (100) und am Maschinengestell (100) gehalterte Bearbeitungseinheiten (300.1, 300.2, 300.3, 320) umschliesst, und dass
e) die Rundtaktmaschine eine Einrichtung (500) umfasst zum Temperieren eines Zwischenraums zwischen der Kabine (400) und dem abgeschlossenen Arbeitsraum (3) auf eine vorgegebene Temperatur.

2. Rundtaktmaschine nach Anspruch 1, **dadurch gekennzeichnet, dass** die Einrichtung (500) zum Temperieren des Zwischenraums Auslässe zum Einleiten eines Temperiergases, insbesondere von Luft, in den Zwischenraum umfasst.

3. Rundtaktmaschine nach Anspruch 2, **dadurch gekennzeichnet, dass** die Einrichtung (500) zum Temperieren des Zwischenraums derart ausgebildet ist, dass eine vorgegebene Temperatur im Zwischenraum (2) auf ±2 °C, bevorzugt auf ±1 °C, genau einstellbar ist.

4. Rundtaktmaschine nach einem der Ansprüche 1 bis 3, **dadurch gekennzeichnet, dass** eine Temperierflüssigkeit in den Arbeitsraum (3) innerhalb des Maschinengestells (100) einleitbar ist.

5. Rundtaktmaschine nach Anspruch 4, **dadurch gekennzeichnet, dass** in strukturellen Elementen (153.1...153.12) des Maschinengestells (100) Leitungen (156) für die Temperierflüssigkeit vorgesehen sind zur thermischen Stabilisierung des Maschinengestells (100), wobei zumindest einige der Leitungen (156) in am Maschinengestell (100) angeordneten Auslässen (157) zum Einleiten der Temperierflüssigkeit in den Arbeitsraum (3) münden.

6. Rundtaktmaschine nach einem der Ansprüche 2 bis 5, **dadurch gekennzeichnet, dass** die Einrichtung (500) zum Temperieren des Zwischenraums eine Abführeinrichtung (542) zum Abführen des Temperiergases aus dem Zwischenraum umfasst und einen Wärmetauscher (532) zum erneuten Abkühlen bzw. Erwärmen des abgeführten Temperiergases, so dass ein im Wesentlichen geschlossener Temperiergas-Kreislauf (533) gebildet werden kann.

7. Rundtaktmaschine nach Anspruch 6, **dadurch gekennzeichnet, dass** die Auslässe zum Einleiten des Temperiergases in einem Bodenbereich der Rundtaktmaschine (1) angeordnet sind und dass Einlässe der Abführeinrichtung (542) in einem Deckenbereich der Rundtaktmaschine (1), insbesondere in einem Deckenteil der Kabine (400), angeordnet sind.

8. Rundtaktmaschine nach einem der Ansprüche 1 bis 7, **dadurch gekennzeichnet, dass** mindestens eine der Bearbeitungseinheiten (300.1, 300.2, 300.3, 320) eine Arbeitsspindel (304.1, 304.2, 304.3) aufweist, wobei die Arbeitsspindel (304.1, 304.2, 304.3) Kühlleitungen für eine Kühlflüssigkeit aufweist zum Kühlen der Arbeitsspindel (304.1, 304.2, 304.3) und eines an der Spindel angeordneten Werkzeugs sowie zum Spülen eines Arbeitsbereichs der Arbeitsspindel (304.1, 304.2, 304.3).

9. Rundtaktmaschine nach einem der Ansprüche 1 bis 8, **dadurch gekennzeichnet, dass** das Maschinengestell (100) durch einen im Wesentlichen rotationssymmetrischen Unterteil (110) und einem im Wesentlichen rotationssymmetrischen Oberteil (150) gebildet ist.

10. Rundtaktmaschine nach Anspruch 9, **dadurch gekennzeichnet dass** der Unterteil (110) und der Oberteil (150) einstückige Gussteile sind.

11. Rundtaktmaschine nach einem der Ansprüche 1 bis 10, **dadurch gekennzeichnet, dass** das Maschinengestell (100) sektorartige Ausschnitte (116.1...116.12, 154.1...154.12) aufweist, durch welche die Bearbeitungseinheiten (300.1, 300.2, 300.3, 320) in den Arbeitsraum (3) eingreifen können.

12. Rundtaktmaschine nach Anspruch 11, **dadurch gekennzeichnet, dass** bis zu drei Bearbeitungseinheiten (300.1, 300.2, 300.3) übereinander angeordnet werden können zur Bearbeitung eines am Rundtisch (200) aufgenommenen Werkstücks von der Seite, von unten und von oben.

13. Rundtaktmaschine nach Anspruch 9 und 12, **dadurch gekennzeichnet, dass** jeweils übereinander mindestens zwei sektorartige Ausschnitte (116.1...116.12, 154.1...154.12) angeordnet sind, wobei ein unterer der Ausschnitte (116.1... 116.12) an einer unteren Seite des Oberteils (150) ausgebildet ist, zur Aufnahme einer Bearbeitungseinheit (300.3) für die Bearbeitung von unten, sowie eine oberer der Abschnitte (154.1...154.12) an einer äusseren und/oder oberen Seite des Oberteils (150) ausgebildet ist, zur Aufnahme einer Bearbeitungseinheit (300.1, 300.2, 320) für die Bearbeitung von der Seite und/oder von oben.

14. Rundtaktmaschine nach Anspruch 13, **dadurch gekennzeichnet, dass** sich der obere Ausschnitt (154.1...154.12) sowohl über einen im Wesentlichen vertikalen als auch über einen im Wesentlichen horizontalen Abschnitt des Oberteils (150) erstreckt und derart ausgebildet ist, dass eine schwenkbare Bearbeitungseinheit (320) aufgenommen werden kann, welche aus einer ersten Position, in welcher das Werkstück im Wesentlichen von der Seite bearbeitet wird, in eine zweite Position, in welcher das Werkstück im Wesentlichen von oben bearbeitet wird, verschwenkbar ist.

15. Rundtaktmaschine nach Anspruch 14, **dadurch gekennzeichnet, dass** der obere Ausschnitt (154.1...154.12) durch eine einschiebbare Platte (155.1...155.12) in zwei Ausschnitte unterteilbar ist, so dass zwei Bearbeitungseinheiten (300.1, 300.2) in diesem Ausschnitt (154.1...154.12) angeordnet werden können.

16. Rundtaktmaschine nach einem der Ansprüche 1 bis 15, **dadurch gekennzeichnet, dass** am Drehtisch (200) ein erster Ring (220) mit einer Hirth-Verzahnung fest angeordnet ist, dass koaxial dazu ein zweiter Ring (221) mit Hirth-Verzahnung am Maschinengestell (100) befestigt ist und dass ein dritter, vertikal bewegbarer Ring (222) mit Hirth-Verzahnung mit dem ersten und dem zweiten Ring (220, 221) zusammenwirkt, um den Drehtisch (200) lösbar fest am Maschinengestell (100) zu verankern.

17. Rundtaktmaschine nach Anspruch 16, **dadurch gekennzeichnet, dass** am Maschinengestell (100) mehrere Hydraulikeinheiten (210.1...210.6) angeordnet sind, mittels welchen der dritte Ring (222) angehoben werden kann, um den ersten mit dem zweiten Ring (220, 221) zu koppeln, und abgesenkt, um den Drehtisch (200) freizugeben und eine Drehbewegung desselben zu ermöglichen.
